# EUROPEAN PATENT APPLICATION

(11) **EP 4 484 137 A1**
(43) Date of publication of application: **01.01.2025**
(21) Application number: 24183410.0
(22) Date of filing: 20.06.2024
(51) Int. Cl.: B29C 65/78, B29C 65/20, B25B 1/10, B25B 1/24, B25B 5/14, B25B 5/16, B29L 23/00, B29K 23/00

(54) **ALIGNMENT AND FASTENING DEVICE FOR WELDING PIPES AND FITTINGS**

(30) Priority: 26.06.2023 IT 202300013131
(71) Applicant: RITMO S.p.A., 35037 Teolo (Padova) (IT)
(72) Inventor: BORTOLI, Renzo, 35036 Montegrotto Terme (Padova) (IT); APOLINARI, Alessandro, 35030 Cervarese Santa Croce (Padova) (IT)
(74) Representative: Forattini, Amelia

(57) **Abstract**

An alignment and fastening device for welding pipes and fittings having guiding means (2), a first clamp unit (10) and a second clamp unit (20) respectively engaging a first tubular element and a second tubular element to be joined by means of a welding; at least one between the first clamp unit (10) and the second clamp unit (20) is movable with respect to the other, by means of handling means (30), from a distant position to a close welding position; friction means (50) curb the relative motion between the first and the second clamp units (10, 20).

## Description

The present invention relates to an alignment and fastening device for welding pipes and fittings, particularly for polyfusion pocket welding.

As is well known, polyfusion welding is a process used to join pipes and fittings made of thermoplastic materials, such as polypropylene (PP) and high-density polyethylene (HDPE).

This type of welding is commonly used for the installation of pipes and ducts where a secure and durable joint of the tubular elements is required.

The plastic elements, pipes and fittings, are welded together by polyfusion using alignment equipment to ensure the coaxiality of the elements to be welded.

Typically, such alignment equipment has a main body carrying a pair of clamps, at least one of which is movable relative to the other.

In a first type of alignment equipment, there is only one mobile clamp, which is generally mounted on a slide moved by a worm screw that can be operated manually or by means of a special actuator.

In a second type of alignment equipment, both clamps can be moved, for example by means of an articulated system that connects them to a pair of toothed wheels meshing on a worm gear that can be operated, again, manually or by means of a special actuator.

The conventional alignment equipment described above has some drawbacks in practice.

Namely, in both prior art systems, given the same displacement of the clamp(s), the use of a short-pitch worm screw requires a high number of revolutions to be transmitted to the screw, while using a long-pitch worm screw requires a higher torque to be transmitted to the screw.

In order to counter such problem, other types of alignment equipment with a single moving clamp have been developed, wherein the motion of the clamp is implemented by means of rack and pinion mechanisms. However, also that type of equipment has drawbacks. Namely, because of the smoothness and dynamism of the handling mechanism, such system is unsuitable for use in work situations where vertical positioning of the rack is required.

In such situations, in fact, one of the two clamps tends to slide downwards by gravity, in an uncontrolled and involuntary manner.

Therefore, the operator must physically counteract such occurrence, resulting in fatigue and stiffening of the muscles.

JPS6110437A discloses a device designed to prevent a false motion of the operation lever of fusion welding devices. The device should enable to absorb shock reaction at the time of release of lock after fusion welding, by means of a movable end of a toggle spring hung on a pin of a locking gear interlocking with an operation lever and providing a brake making a friction plate contact elastically with the locking gear. JPS6110437A does not solve the problem generated in work situations where vertical positioning of the rack is required.

The aim of the present invention is to provide an alignment and fastening device for welding pipes and fittings that overcomes the drawbacks of the cited prior art.

Within the above aim, a particular object of the invention is to provide a device that maximizes fastening efficiency and, at the same time, minimizes the muscular effort required by the user.

A further object of the invention is to provide a device that enables the above-mentioned result to be achieved in a practical and relatively inexpensive manner.

A further object of the present invention is to provide a device of relatively simple design, extremely functional and small in size.

A further object of the invention is to provide a device which, due to its special design features, is able to ensure reliability and safety in use.

This aim, these objects and other which will become better apparent hereinafter, are achieved by an alignment and fastening device for welding pipes and fittings, as claimed in the appended claims.

Further characteristics and advantages will become better apparent from the description of a preferred, but not exclusive, embodiment, illustrated by way of nonlimiting example in the accompanying drawings:
Figure 1 is a perspective view of the device according to the invention;
Figure 2 is a further perspective view of the device according to the invention;

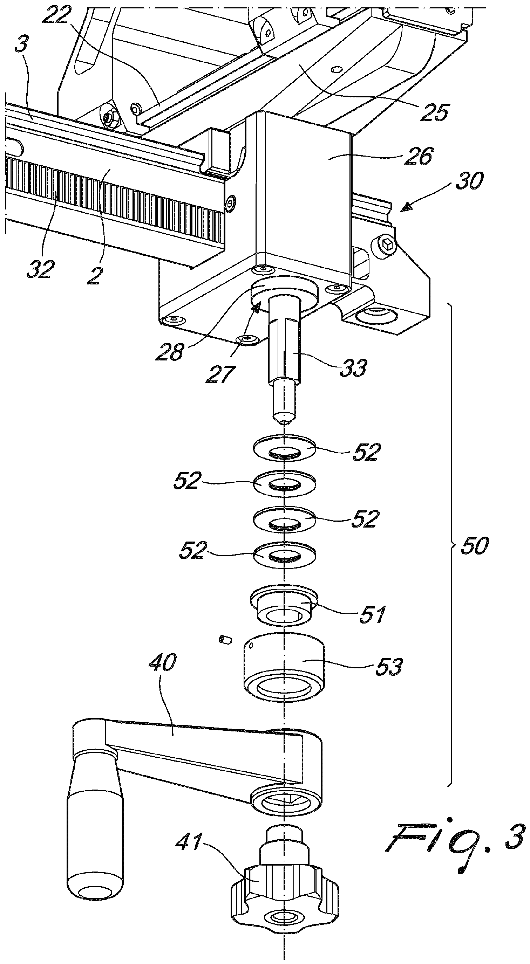

Figure 3 is an exploded perspective view of part of the device;

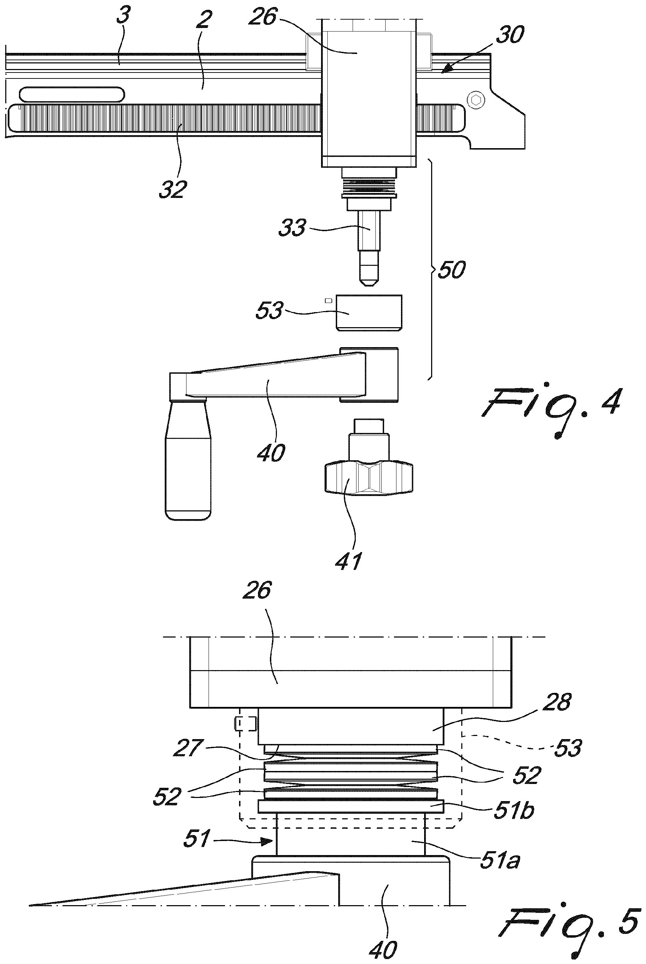

Figure 4 is an exploded side view of part of the device;
Figure 5 is a side view of a detail of the device;

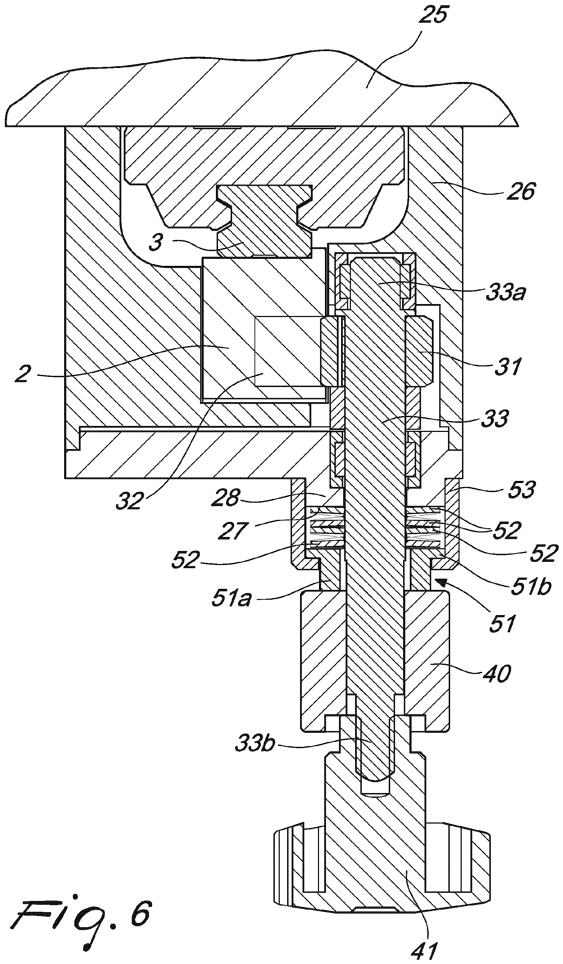

Figure 6 is a sectional side view of part of the device.

With reference to the figures, the device according to the invention, globally designated by the reference number 1, comprises guiding means having an elongated body 2, which supports a first clamp unit 10 and a second clamp unit 20 respectively engaging a first tubular element and a second tubular element to be joined by welding.

The first and second clamp units 10, 20 respectively comprise a first pair of jaws 11a, 11b, carried by a first base 12, and a second pair of jaws 21a, 21b, carried by a second base 22.

Advantageously, the first and second bases 12, 22 are removably connected to a first and second base 15, 25 respectively.

The jaws 11a, 11b, 21a, 21b of the first and second clamp units 10, 20 are opposed to each other and are movable with respect to each other by means of control means 13, 23.

The jaws 11a, 11b, 21a, 21b comprise ridges or knurls 14, 24 , at least partially extending on their inner surface, to improve grip on tubular elements.

The pairs of jaws 11a and 11b, 21a and 21b, together with the corresponding base 12, 22, are interchangeable with each other or with other jaws having different dimensions and/or characteristics and are reversible; that is, each pair of jaws 11a and 11b, 21a and 21b can be rotated by 180°, together with the corresponding base 12, 22, with respect to a median plane of the base 15, 25 on which it is mounted, such plane being orthogonal to a direction 100 of longitudinal development of the elongated body 2.

Advantageously, the second clamp unit 20 is engaged in a sliding manner with a rail 3 mechanically associated with the extended body 2. The second clamp unit 20 is movable along a direction 100 from a distant position from the first clamp unit 10, which is permanently fixed to the extended body 2, to a welding position close to the first clamp unit 10.

As will be apparent to the expert in the art, the first clamp unit 10 may be movable and the second clamp unit 20 may be fixed, or both clamp assemblies 10, 20 may be movable along the direction 100.

The second clamp unit 20 is moved by handling means 30 comprising a pinion 31 engaging a rack 32 mechanically associated with the elongated body 2. The pinion 31 engages a first end 33a of a shaft 33, at least in rotation. The shaft 33 is housed in a body 26 joined to the second base 25 and slidingly engaged with the elongated body 2.

A second end 33b of the shaft 33 is removably engaged, at least in rotation, to an operating crank 40 which is preferably fixed to the shaft 33 by means of a handwheel 41, which is preferably a safety lobed handwheel.

In this context, a 'safety' handwheel is a normally idle handwheel, which can only be operated in rotation after being moved axially in relation to its axis of rotation.

According to a further operative configuration of the device 1, not shown in the figures, the operating crank 40 is removed and the second end 33b of the shaft 33 is detachably attached to a separate device.

For this purpose, preferably, the second end 33b of the shaft 33 is made with a polygonally facetted side wall to be accommodated in a complementarily polygonal seat formed in the operating crank 40.

A grip handle 4, detachably attached to the elongated body 2, makes it easier for a user of the device 1 to grip and handle it.

According to the present invention, the device 1 comprises friction means 50 removably associated with the handling means 30 for the purpose of braking the relative motion between the first and second clamp units 10, 20.

Preferably, the friction means 50 are detachably attached to the shaft 33 and are interposed between the operating crank 40 and a contrast seat 27 formed by a neck 28 protruding from the body 26.

The friction means 50 comprise a thrust element 51 associated with the operating crank 40 and a Belleville springs pack 52 cooperating with the thrust element 51 and the contrast seat 27.

The Belleville springs 52 are preferred because they allow for a reduction in the size of the friction means 50.

The thrust element 51 is axially hollow and is slidably mounted on the shaft 33.

According to an aspect of the invention, the thrust element 51 comprises a tubular body 51a abutting the operating crank 40, and a plate 51b for coupling with the Belleville springs 52.

In the illustrated example there are four Belleville springs 52, however the number of springs may be any convenient number according to specific requirements. The Belleville springs 52 are preferably coaxially stacked and each of them has a convexity oriented in the opposite direction to the adjacent Belleville spring 52; this allows to increase the effectiveness of the friction means 50.

Belleville springs 52 are fitted to the shaft 33 so as to condition the rotation of the shaft 33 and consequently slow down the motion of the second clamp unit 20 with respect to the elongated element 2 and the first clamp unit 10.

By turning the handwheel 41 it is possible to change the distance between the thrust element 51 and the contrast seat 27 and, consequently, to adjust the braking action of the Belleville springs 52.

A stop ring 53 is mechanically attached to the neck 28, e.g. by screwing, preventing the Belleville springs 52 from slipping out when the operating crank 40 is not mounted on the shaft 33.

The stop ring 53 is specifically arranged to strike the plate 51b and it is the end stop for the sliding of the thrust element 51.

The device 1 according to the present invention operates as follows.

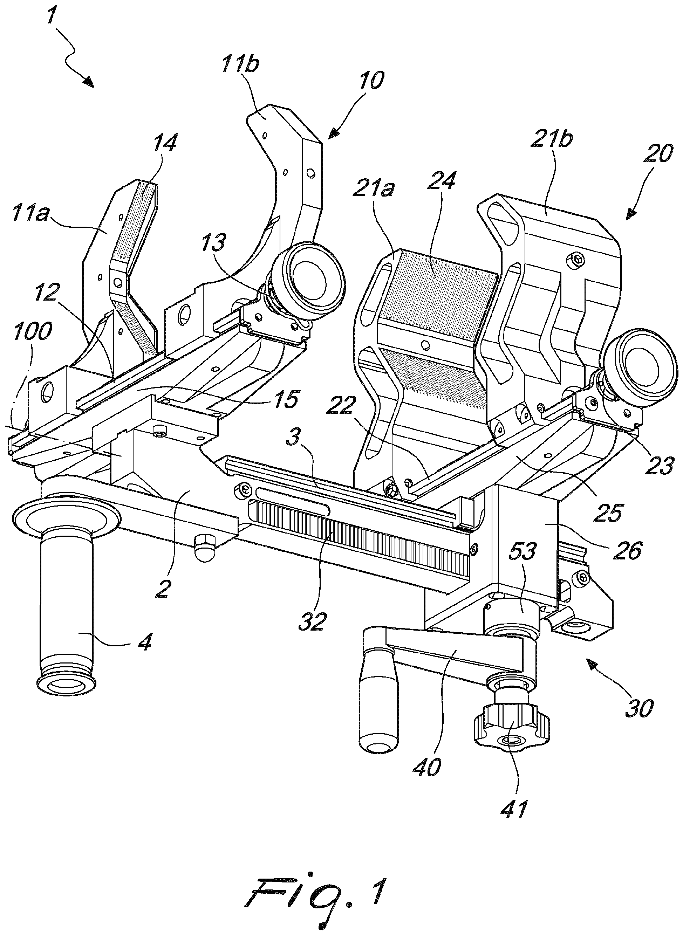

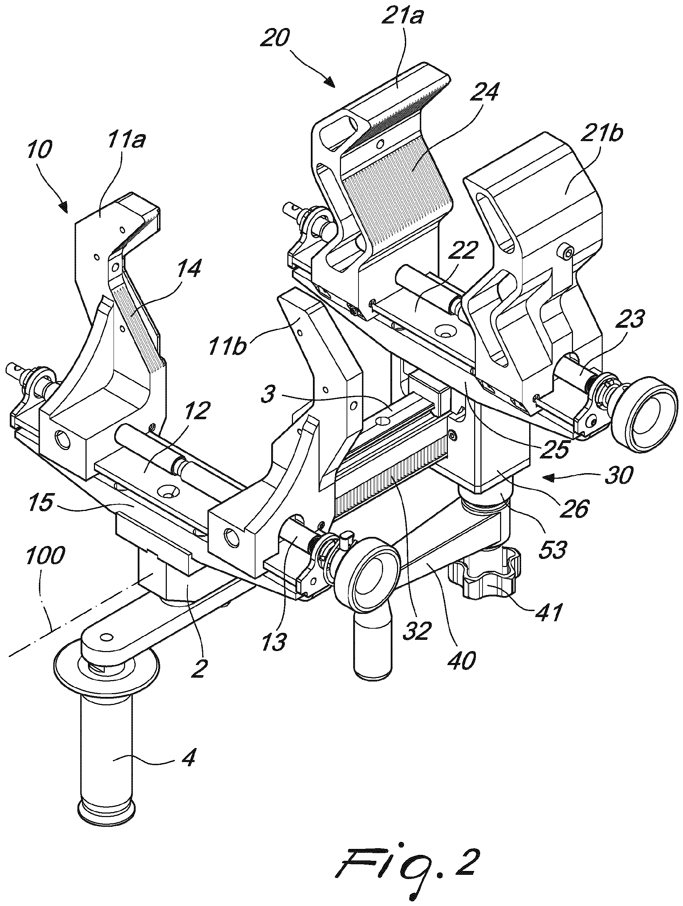

At rest, the device 1 is configured as shown in Figures 1 and 2; when two tubular elements are to be welded in place, one of them is clamped between jaws 11a, 11b of the first clamp unit 10, while the other tubular element is clamped between jaws 21a, 21b of the second clamp unit 20.

Once the ends of the tubular elements to be welded have been adequately prepared, the second clamp unit 20 is moved by turning the crank handle 40, sliding it towards the first clamp unit 10 until the ends of the two tubular elements are brought together and engaged with a heating device placed between them.

After the heating time has elapsed, the two tubular elements are pulled apart and the heating device is removed, after which the two tubular elements are immediately brought together again, progressively increasing the welding pressure by turning the crank handle 40.

In order to slow and/or control the drag force of the second clamp unit 20, particularly when the extended body 2 is in a substantially vertical position, the braking action of the friction means 50 can be utilized.

In particular, by acting on the handwheel 41 it is possible to modify the distance between the thrust element 51 and the contrast seat 27, so as to increase or decrease the interference, and therefore the friction, between the Belleville springs 52 and the shaft 33.

Once the welding phase is complete, the contact pressure is cancelled, and the two tubular elements can be removed from the device 1.

In practice, it has been found that the invention achieves its intended task and purpose by having provided an alignment and fastening device for welding pipes and fittings which, while maintaining a high degree of mechanical efficiency, does not require the user to exert any more muscular effort than is necessary for fastening the tubular elements to be welded.

In fact, the friction means allow to slow down the motion of the movable clamp unit if necessary, particularly when the extended body of the device is in a substantially vertical position.

In particular, the thrust element slidingly mounted on the shaft and the Belleville springs cooperate with the thrust element and with the abutment seat formed by the second clamp unit, wherein the thrust member is associated with operating crank.

A further advantage of the device according to the invention is that it enables the above-mentioned result to be achieved in a practical and relatively inexpensive manner.

Furthermore, the device according to the invention, due to its special design features, is able to ensure the broadest guarantees of reliability and safety in use.

The materials used, as well as the dimensions and shapes, may be any according to requirements and the state of the art.

## Claims

1. An alignment and fastening device for welding pipes and fittings, comprising guiding means (2), a first clamp unit (10) and a second clamp unit (20) respectively engaging a first tubular element and a second tubular element to be joined by means of welding; at least one of said first and second clamp units (10, 20) being movable with respect to the other one by means of handling means (30), from a distant position to a close welding position; said device further comprising a friction means (50) configured to curb the relative motion between said first and second clamp units (10, 20); said handling means (30) comprising a shaft (33) rotatably supported by said second clamp unit (20), and a pinion (31) engaging a rack (32) mechanically associated with said elongated body (2); said pinion (31) engaging a first end (33a) of said shaft (33), at least in rotation; said shaft (33) having a second end (33b) removably engaged, at least in rotation, to an operating crank (40); said second end (33b) protruding from said second clamp unit (20); said friction means (50) being removably engaged to said shaft (33) and being interposed between said operating crank (40) and said second clamp unit (20); said device being **characterized in that** said friction means (50) comprise a thrust element (51) slidingly mounted on said shaft (33) and one or more Belleville springs (52) cooperating with said thrust element (51) and with a contrast seat (27) formed by said second clamp unit (20); said thrust element (51) being configured to be associated with said operating crank (40).

2. The device, according to the preceding claim, **characterized in that** said friction means (50) is removably associated with said handling means (30).

3. The device according to one or more of the preceding claims, **characterized in that** said friction means (50) comprises a pack of coaxially stacked Belleville springs (52); each spring (52) of said pack having a convexity oriented in the opposite direction to the adjacent spring (52).

4. The device, according to one or more of the preceding claims, **characterized in that** said friction means (50) comprises a stop ring (53) mechanically associated with a neck (28) protruding from said second clamp unit (20) and forming said contrast seat (27); said stop ring (53) limiting the stroke of said thrust element (51).

5. The device, according to one or more of the preceding claims, **characterized in that** it comprises a handwheel (41) removably associated with said second end of said shaft (33); said handwheel (41) being configured to removably fasten said operating crank (40) to said shaft (33) and to adjust the distance between said thrust element (51) and said contrast seat (27), so as to adjust the braking action of said friction means (50).

6. The device, according to one or more of the preceding claims, **characterized in that** said guiding means comprise an elongated body (2) supporting said first clamp unit (10) and said second clamp units (20); said first clamp unit (10) being engaged to one end of said elongated body (2); said second clamp unit (20) being slidingly engaged to said elongated body (2).

7. The device, according to one or more of the preceding claims, **characterized in that** said first and second clamp units (10, 20) comprise respective pairs of opposing jaws (11a, 11b, 21a, 21b), movable transversely to said elongated body (2) upon actuation of control means (13, 23); said pairs of jaws (11a, 11b, 21a, 21b) being interchangeable and reversible.

8. The device, according to one or more of the preceding claims, **characterized in that** it comprises at least one grip handle (4) removably engaged to said elongated body (2).
